# EUROPEAN PATENT APPLICATION

(11) **EP 4 796 904 A1**
(43) Date of publication of application: **26.08.2026**
(21) Application number: 25864613.2
(22) Date of filing: 16.12.2025
(51) Int. Cl.: G01J 1/00

(54) **LIGHT-SENSING SENSOR, LIGHTING FIXTURE AND USE METHOD**

(30) Priority: 27.12.2024 CN 202411962103
(71) Applicant: Self Electronics Co., Ltd., Ningbo City, Zhejiang 315103 (CN); SELF ELECTRONICS Germany GmbH, 51149 Köln (DE)
(72) Inventor: The designation of the inventor has not yet been filed
(74) Representative: 2K Patent Partnerschaft mbB
(86) International application number: PCT/CN2025/142969
(87) International publication number: WO 2026/138592

(57) **Abstract**

The present application relates to the technical field of lamps, and in particular to a light sensor, a lamp and a method for using the same. The light sensor comprises: a condenser lens; a light inductor; and a housing, wherein the housing is provided with an accommodating space and a through hole. The condenser lens and the light inductor are respectively fixedly arranged in the accommodating space of the housing, the condenser lens is partially arranged in the through hole, and the condenser lens is arranged corresponding to the light inductor. The condenser lens is configured to collect light rays outside the housing, and the light inductor is configured to sense changes in the light rays collected by the condenser lens. The present application provides a light sensor, a lamp and a method for using the same, so as to solve the problem existing in conventional sensors that the light-collecting element and the sensing element are respectively fixed by two separate components during the design process, resulting in inaccurate positioning between the light-collecting element and the sensing element due to installation errors during subsequent assembly and use, which affects the use effect of the sensor and leads to poor user experience.

## Description

This application claims priority to Chinese Patent Application No. 202411962103.6, named "A light sensor, a lamp and a method for using the same", filed on December 27, 2024, the disclosures of which are incorporated herein by reference in its entirety.

### Field of Invention

The present application relates to the technical field of lamps, and in particular to a light sensor, a lamp and a method for using the same.

### Background of Invention

With the improvement of people's living standards and the deepening of the concept of environmental protection, households have put forward higher requirements for lamps. It is expected that the lamps can save electricity to the maximum extent during normal use, so as to conform to the concept of environmental protection. In addition, with the development of modern home systems, users wish to adjust the light of the lamps.

In the recent years, sensors have been adopted in the design and application of lamps, so that the sensors can sense the ambient light and cooperate with the lamps to adjust the emitted light. In the design of existing sensors, the light-collecting element and the sensing element are usually fixed by two separate components respectively. This results in inaccurate positioning between the light-collecting element and the sensing element due to installation errors during assembly and use, which further affects the overall use effect of the sensor and leads to poor user experience.

### Summary of Invention

In view of this, the present application provides a light sensor, a lamp and a method for using the same, so as to solve the problem in existing sensors with inaccurate positioning between the light-collecting element and the sensing element due to installation errors during subsequent assembly and use, which affects the use effect of the sensor and leads to poor user experience.

According to a first aspect, the present application provides a light sensor, comprising:
a condenser lens;
a light inductor;
a housing, wherein the housing is provided with an accommodating space and a through hole; the condenser lens and the light inductor are respectively fixedly arranged in the accommodating space of the housing; the condenser lens is partially arranged in the through hole; and the condenser lens is arranged corresponding to the light inductor.

The condenser lens is arranged corresponding to the light inductor. The condenser lens is configured to collect light rays outside the housing, and the light inductor is configured to sense changes in the light rays collected by the condenser lens. The condenser lens and the light inductor are fixed by the housing at the same time, which ensures the accuracy of positioning and fitting, and avoids inaccurate positioning caused by installation tolerances when the condenser lens and the light inductor are respectively fixed by two different components. The condenser lens is partially arranged in the through hole, so that the condenser lens can collect light rays outside the housing.

In an optional embodiment, a clamping part is arranged on the inner wall of a side plate of the housing; a bottom plate of the housing is arranged perpendicular to the side plate; the through hole is arranged on the bottom plate; and the clamping part is configured to clamp the light inductor.

In an optional embodiment, a protruding cavity is arranged on the side plate of the housing, and the clamping part is arranged on the inner wall of the protruding cavity.

In an optional embodiment, the condenser lens is configured to partially protrude out of the bottom plate.

In an optional embodiment, the cross section of the condenser lens is arc-shaped.

In an optional embodiment, the light sensor further comprises a PCB board, the PCB board is arranged in the accommodating space and provided with a mounting hole, and a pin of the light inductor is configured to pass through the mounting hole and then be fixed to the PCB board.

In an optional embodiment, the light sensor further comprises a sealing plate; the housing is provided with an opening, and the sealing plate is configured to close the opening; the sealing plate is provided with an insertion hole; a power-taking pin is arranged on a surface of the PCB board facing away from the accommodating space, and the power-taking pin is configured to pass through the insertion hole.

In an optional embodiment, the light sensor further comprises a plug block; the plug block is fixedly connected to the sealing plate, and the power-taking pin is configured to pass through the plug block; two sides of the sealing plate are respectively provided with a receiving portion, and a magnetic member is configured to be received in each of the receiving portions.

According to a second aspect, the present application further provides a lamp, comprising the light sensor as described above.

According to a third aspect, the present application further provides a method for using a light sensor, comprising:
collecting light rays outside the housing by using a condenser lens;
and sensing changes in the light rays collected by the condenser lens by using a light inductor.

### Overview on drawings

Hereinafter, the invention will be disclosed with reference to the drawings and exemplary embodiments, from which further features, technical effects and problems to be solved will become apparent. In the drawings:
- Fig. 1: is an exploded schematic view of a light sensor according to an embodiment of the present application.
- Fig. 2: is a schematic view of the housing, the condenser lens and the light inductor according to an embodiment of the present application.
- Fig. 3: is a schematic view of the sealing plate according to an embodiment of the present application.
- Fig. 4: is a schematic view of the light sensor according to an embodiment of the present application.
- Fig. 5: is a schematic view of a light sensor and a lamp housing according to an embodiment of the present application.
- Fig. 6: is a bottom schematic view of a light sensor and a lamp housing according to an embodiment of the present application.
- Fig. 7: is a schematic view of another embodiment of the light sensor according to an embodiment of the present application.

Wherein, 1 housing, 101 clamping part, 102 through hole, 103 side plate, 104 bottom plate, 105 protruding cavity, 106 accommodating space, 2 condenser lens, 201 curved surface, 202 flat surface, 3 PCB board, 301 power-taking pin, 302 signal pin, 4 sealing plate, 401 insertion hole, 402 receiving portion, 403 welding end, 5 magnetic member, 6 plug block, 7 light inductor, 8 lamp housing.

Throughout the drawings, like reference numerals designated identical or substantially equivalent elements or groups of elements.

### Detailed description of preferred embodiments

In the following description, to illustrate rather than limit, specific details such as a particular system structure, and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

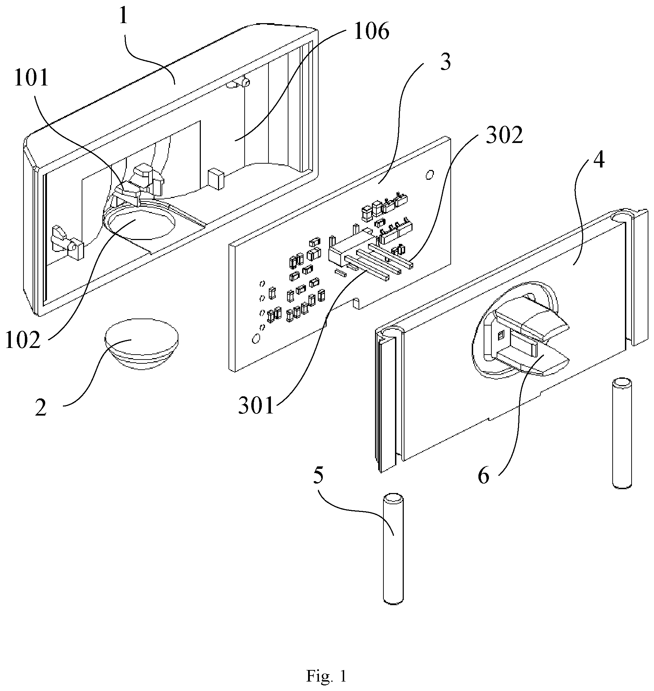

Embodiments of the present application will be described below with reference to FIGs. 1 to 7.

According to an embodiment of the present application, in a first aspect, a light sensor is provided, comprising: a condensing lens 2; a light sensor 7; and a housing 1. The housing 1 is provided with an accommodating space 106, and a through hole 102 is formed in the housing 1. The condensing lens 2 and the light sensor 7 are respectively fixedly arranged in the accommodating space 106 of the housing 1, and a part of the condensing lens 2 is disposed in the through hole 102.

The condensing lens 2 is arranged corresponding to the light sensor 7. The condensing lens 2 is configured to collect light outside the housing 1, and the light sensor 7 is configured to sense changes in the light collected by the condensing lens 2. By fixedly arranging both the condensing lens 2 and the light sensor 7 through the housing 1, simultaneous fixing by the housing 1 is achieved, which ensures the accuracy of positioning and fitting as well as the consistency in mass production of products. This avoids the problem of inaccurate positioning caused by installation tolerances of two different components when the condensing lens 2 and the light sensor 7 are respectively fixed by two separate components. A part of the condensing lens 2 is disposed in the through hole 102 (i.e., a part of the condensing lens 2 is located in the through hole 102 and another part is located inside the housing 1) so that the condensing lens 2 can collect light outside the housing 1. It should be noted that in this embodiment, the fixing method between the condensing lens 2 and the housing 1 is not specifically limited, and various methods such as adhesion and clamping can be used for fixing.

In one embodiment, as shown in FIGs. 1, 2, and 3, a clamping part 101 is provided on the inner wall of a side plate 103 of the housing 1. A bottom plate 104 of the housing 1 is arranged perpendicular to the side plate 103, the through hole 102 is formed in the bottom plate 104, and the clamping part 101 is configured to clamp the light sensor 7. The light sensor 7 is clamped by the clamping part 101, and the bottom plate 104 is arranged perpendicular to the side plate 103, so that the light collected by the condensing lens 2 is directly transmitted to the light sensor 7. It should be noted that this embodiment does not limit the clamping method of the clamping part 101, and the clamping part 101 can clamp the light sensor 7 through various methods such as clamping and plugging to ensure the stability of the light sensor 7.

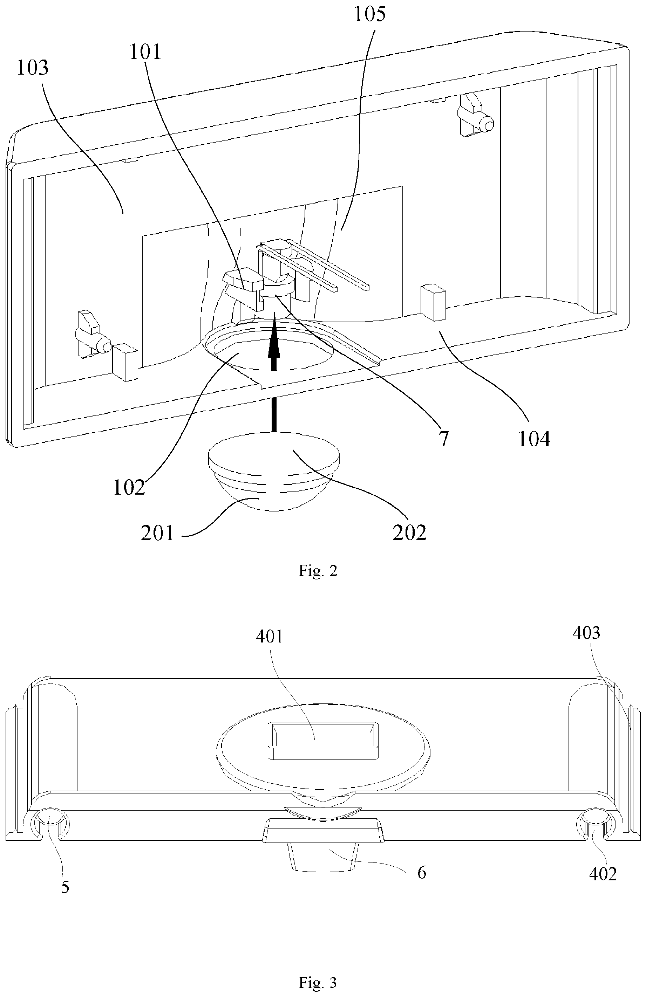

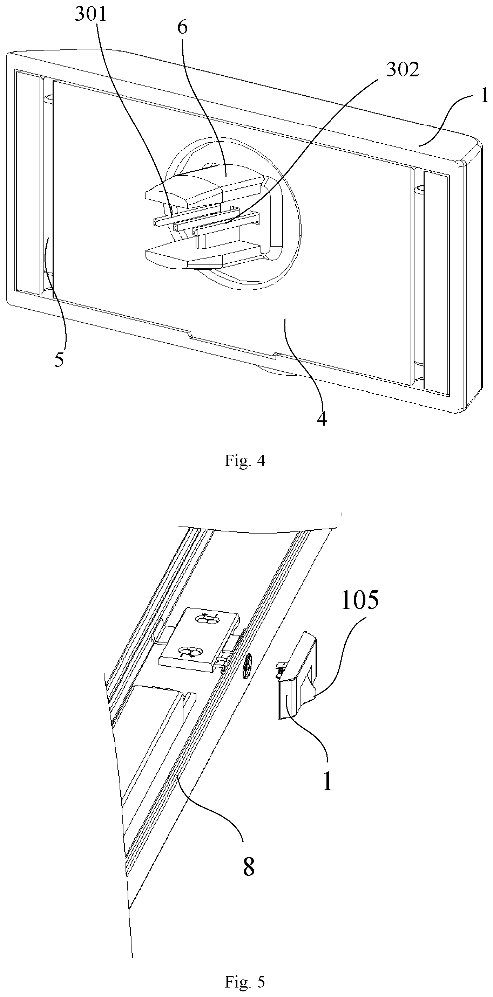

In one embodiment, as shown in FIGs. 2 and 5, a protruding cavity 105 is provided on the side plate 103 of the housing 1, and the clamping part 101 is arranged on the inner wall of the protruding cavity 105. The protruding cavity 105 is arranged to protrude from the side plate 103 to increase the volume of the accommodating space 106, thereby providing sufficient space in the accommodating space 106 to accommodate the clamping part 101 and the light sensor 7. In addition, the shape of the protruding cavity 105 is different from that of the sealing plate 4, and the protruding cavity 105 serves as an anti-reverse structure to prevent users from incorrect installation

In one embodiment, as shown in FIGs. 1 and 2, a part of the condensing lens 2 protrudes outside the bottom plate 104 to collect light from outside the housing 1.

In one embodiment, as shown in FIGs. 1 and 2, the cross-section of the condensing lens 2 is arc-shaped. Through this design, the arc-shaped curved surface 201 of a part of the condensing lens 2 protrudes outside the bottom plate 104 to collect light from different directions outside the housing 1. After being concentrated by the condensing lens 2, the light is transmitted to the light sensor 7 through a flat surface 202. The condensing lens 2 collects ambient light within a specified range, and the ambient light is refracted into parallel light by the condensing lens 2, passes through the flat surface 202, and is transmitted to the light sensor 7.

In one embodiment, as shown in FIGs. 1 and 2, the light sensor further comprises a PCB board 3. The PCB board 3 is disposed in the accommodating space 106, and is provided with mounting holes. The light sensor 7 is fixed to the PCB board 3 by passing its pins through the mounting holes. The light sensor 7 is fixed by the PCB board 3, ensuring the stability of the light sensor 7 during use. In addition, the signals of the light sensor 7 are transmitted to the PCB board 3 through the pins.

In one embodiment, as shown in FIGs. 3 and 4, the light sensor further comprises a sealing plate 4. The housing 1 has an opening, and the sealing plate 4 is capable of closing the opening. The sealing plate 4 is provided with insertion holes 401. A power-taking pin 301 is provided on the surface of the PCB board 3 facing away from the accommodating space 106, and the power-taking pin 301 passes through the insertion hole 401 to supply power to the PCB board 3.

In this embodiment, as shown in FIGs. 3 and 4, a signal pin 302 is further provided on the surface of the PCB board 3 facing away from the accommodating space 106. The signal pin 302 passes through the insertion hole 401 to provide signal transmission between the PCB board 3 and the lamp.

In one embodiment, as shown in FIGs. 1, 3, and 4, the light sensor further comprises a plug-in block 6. The plug-in block 6 is fixedly connected to the sealing plate 4, and the power-taking pin 301 passes through the plug-in block 6. Two accommodating parts 402 are respectively provided on both sides of the sealing plate 4, and a magnetic component 5 is accommodated in each accommodating part 402. Specifically, the magnetic component 5 is a magnet. It should be noted that the plug-in block 6 is disposed on the side of the sealing plate 4 facing away from the PCB board, and the plug-in interface is detachably connected to the sealing plate 4 through plugging, clamping, adhesion, or other methods. In addition, in this embodiment, the shape of the magnetic component 5 is not specifically limited, and it can be in various forms such as cylindrical and rectangular. The magnetic component 5 shown in FIGs. 3 and 4 is cylindrical, and the accommodating part 402 is arc-shaped to match the magnetic component 5.

In this embodiment, as shown in FIG. 3, welding ends 403 are respectively provided at both ends of the sealing plate 4. Ultrasonic welding between the sealing plate 4 and the housing 1 is achieved through the welding ends 403, thereby ensuring the stability between the components in the entire light sensor.

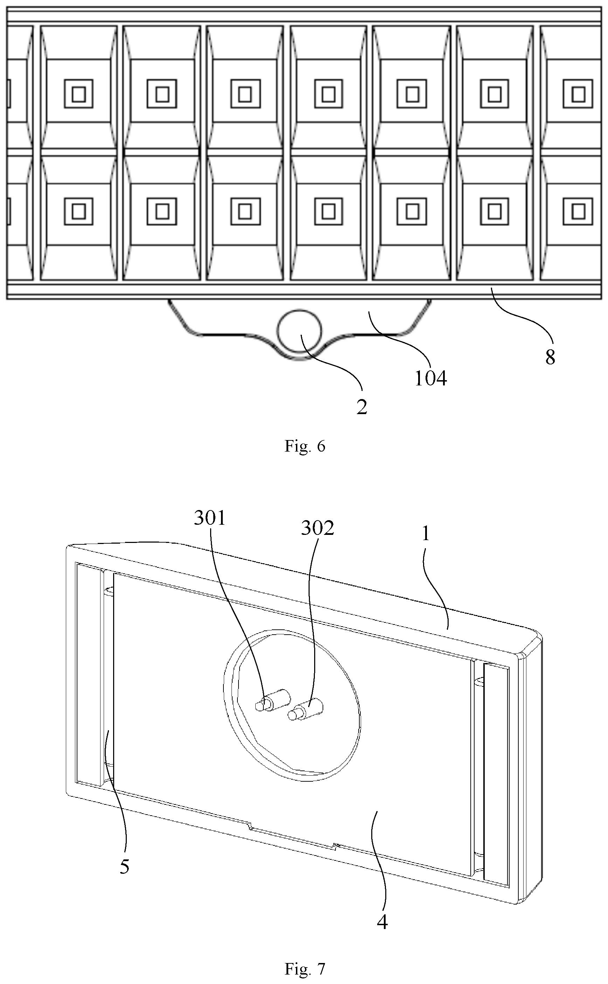

A lamp comprises the light sensor as described above. As shown in Fig. 5 and Fig. 6, the lamp further comprises a lamp housing 8. The light sensor is detachably connected to a side wall of the lamp housing 8. That is, the plug block 6 of the light sensor extends into the side wall of the lamp housing 8, the magnetic member 5 is magnetically connected to the side wall of the lamp housing 8, and the power-taking pin 301 is inserted into the lamp housing 8 to get power. The plug interface, the magnetic member 5 and the power-taking pin 301 cooperate with each other, so as to ensure the connection stability between the light sensor and the lamp housing 8 on the one hand, and facilitate the user to install, maintain and replace the light sensor on the other hand. In this embodiment, the lamp housing 8 can be fixed on a roof, and the lamp housing 8 can be made of iron. The light sensor is arranged on a side of the lamp housing 8. The light sensor collects ambient light within a certain range inside a room through the condenser lens 2. When the ambient light changes, the light inductor 7 converts the collected fluctuation of optical signals into fluctuation of electrical signals. After an ADC (Analog-to-Digital Converter) of a microcontroller unit (MCU) on the PCB board 3 collects the fluctuating electrical signals, a dimming function is realized through a DALI (Digital Addressable Lighting Interface) dimming line of the lamp according to a dimming algorithm.

In another aspect, a method for using a light sensor, which comprises the following steps:
(1) A threshold value is set in the light sensor. During operation, the light sensor collects ambient light through the condenser lens 2, and the microcontroller unit of the PCB board 3 analyzes an average value of the ambient light. When the average value exceeds the set threshold value, the dimming function is triggered to achieve intelligent, energy-saving and comfortable effects;
(2) The light sensor captures fluctuation of the ambient light. When there is no moving user around, this function is not triggered, and the light is maintained at a relatively low brightness to achieve energy saving. When an animal or a user walks into the sensing range of the light sensor, reflected light appears as the light irradiates the user. The intensity change of the reflected light is received and amplified by the condenser lens 2 of the light sensor, and then converted into an electrical signal to brighten the lamp. The light changes gently and slowly in the whole process without causing abrupt or uncomfortable feeling to the user.

The light sensor and the lamp provided by the present application have the following advantages: (1) the condenser lens 2 protrudes out of the housing 1, and is configured to collect light from different directions outside the housing 1; (2) the condenser lens 2 and the light inductor 7 are fixed by the housing 1 at the same time, which ensures the positioning and fitting accuracy of the two components and the consistency in mass production of products; (3) the light inductor 7 is further fixed by the PCB board 3, which ensures the stability of the light inductor 7 during use, and signals are transmitted to the PCB board 3 through pins; (4) the light sensor is connected to the lamp housing 8 by means of magnetic attraction and plug-in connection, which ensures connection stability while realizing detachability.

As an alternative embodiment, as shown in Fig. 7, the plug block 6 may not be provided in the present application, and power taking and signal communication with the lamp housing 8 are realized by means of elastic pins (POGO pins). Different forms are adopted to adapt to different lamps.

As an alternative embodiment, the condenser lens 2 may not protrude out of the housing 1, that is, the condenser lens 2 is flush with an outer surface of the bottom plate 104, or the condenser lens 2 is recessed into the through hole 102.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application, and these modifications and replacements shall fall within the protection scope of this application.

## Claims

1. A light sensor, comprising:
a condenser lens (2);
a light inductor (7);
a housing (1), wherein the housing (1) is provided with an accommodating space (106), and a through hole (102) is arranged in the housing (1); the condenser lens (2) and the light inductor (7) are respectively fixedly arranged in the accommodating space (106) of the housing (1), and the condenser lens (2) is partially arranged in the through hole (102), and the condenser lens (2) is arranged corresponding to the light inductor (7).

2. The light sensor according to claim 1, wherein a clamping part (101) is arranged on the inner wall of a side plate (103) of the housing (1), a bottom plate (104) of the housing (1) is arranged perpendicular to the side plate (103), the through hole (102) is arranged in the bottom plate (104), and the clamping part (101) is configured to clamp the light inductor (7).

3. The light sensor according to claim 2, wherein a protruding cavity (105) is arranged on the side plate (103) of the housing (1), and the clamping part (101) is arranged on the inner wall of the protruding cavity (105).

4. The light sensor according to claim 2, wherein the condenser lens (2) is configured to partially protrude out of the bottom plate (104).

5. The light sensor according to claim 4, wherein the cross section of the condenser lens (2) is arc-shaped.

6. The light sensor according to claim 5, wherein further comprising: a PCB board (3); the PCB board (3) is arranged in the accommodating space (106), the PCB board (3) is provided with a mounting hole, and a pin of the light inductor (7) is configured to pass through the mounting hole and then be fixed to the PCB board (3).

7. The light sensor according to claim 6, wherein further comprising: a sealing plate (4); the housing (1) is provided with an opening, and the sealing plate (4) is configured to close the opening, the sealing plate (4) is provided with an insertion hole (401), and a power-taking pin (301) is arranged on a surface of the PCB board (3) facing away from the accommodating space (106), and the power-taking pin (301) is configured to pass through the insertion hole (401).

8. The light sensor according to claim 7, wherein further comprising a plug block (6); the plug block (6) is fixedly connected to the sealing plate (4), and the power-taking pin (301) is configured to pass through the plug block (6), two sides of the sealing plate (4) are respectively provided with a receiving portion (402), and a magnetic member (5) is configured to be received in each of the receiving portions (402).

9. A lamp, **characterized by** comprising the light sensor according to any one of claims 1 to 8.

10. A method for using a light sensor, which is applied to the light sensor according to any one of claims 1 to 8, **characterized in that** the condenser lens (2) is configured to collect light rays outside the housing (1), and the light inductor (7) is configured to sense changes in the light rays collected by the condenser lens (2).
